# EUROPEAN PATENT APPLICATION

(11) **EP 4 383 408 A1**
(43) Date of publication of application: **12.06.2024**
(21) Application number: 22912050.6
(22) Date of filing: 23.12.2022
(51) Int. Cl.: H01M 10/656, H01M 10/627, H01M 10/613, H01M 50/251, H01M 10/42

(54) **BATTERY PACK WITH IMPROVED SAFETY**

(30) Priority: 23.12.2021 KR 20210186625
(71) Applicant: LG Energy Solution, Ltd., Seoul 07335 (KR)
(72) Inventor: PARK, Gi-Dong, Daejeon 34122 (KR); KIM, Ki-Youn, Daejeon 34122 (KR); KIM, Hyeon-Kyu, Daejeon 34122 (KR); MUN, Jeong-O, Daejeon 34122 (KR); AHN, Jong-Kyu, Daejeon 34122 (KR); YUN, Young-Won, Daejeon 34122 (KR); LEE, Seong-Ju, Daejeon 34122 (KR); LEE, Jae-Ki, Daejeon 34122 (KR)
(74) Representative: Plasseraud IP
(86) International application number: PCT/KR2022/021253
(87) International publication number: WO 2023/121417

(57) **Abstract**

A battery pack or the like configured to secure safety even when a thermal event occurs is disclosed. The battery pack according to an embodiment of the present disclosure includes a battery module having at least one battery cell, a control module connected to the battery module and configured to manage the battery module, and a fire extinguishing tank containing a fire extinguishing agent, coupled to at least one of the battery module and the control module, and having a blocking member whose outer surface at least partially extends downward.

## Description

### TECHNICAL FIELD

The present disclosure relates to a battery, and more particularly, to a battery pack or the like configured to secure safety even when a thermal event occurs.

The present application claims priority to Korean Patent Application No. 10-2021-0186625 filed on December 23, 2021 in the Republic of Korea, the disclosures of which are incorporated herein by reference.

### BACKGROUND ART

Currently commercialized secondary batteries include nickel cadmium batteries, nickel hydrogen batteries, nickel zinc batteries, and lithium secondary batteries. Among them, lithium secondary batteries are in the limelight due to their advantages of free charge and discharge, very low self-discharge rate, and high energy density, as the memory effect hardly occurs, compared to nickel-based secondary batteries.

These lithium secondary batteries mainly use lithium-based oxide and carbon material as positive electrode active material and negative electrode active material, respectively. A lithium secondary battery includes an electrode assembly in which a positive electrode plate and a negative electrode plate coated with such a positive electrode active material and a negative electrode active material, respectively, are disposed with a separator therebetween, and an exterior material, namely a battery case, for sealing and housing the electrode assembly together with the electrolyte.

In general, lithium secondary batteries can be classified into a can-type secondary battery in which an electrode assembly is embedded in a metal can and a pouch-type secondary battery in which an electrode assembly is embedded in a pouch of an aluminum laminate sheet, depending on the shape of the exterior material.

These secondary batteries are widely used not only in small devices such as portable electronic devices, but also in medium and large devices such as electric vehicles and energy storage systems (ESSs), and their use is rapidly increasing. Moreover, in recent years, in order to store and supply electric power for use in buildings such as houses or commercial buildings, residential energy storage systems have been widely used. In addition, the core component of such a residential energy storage system can be a battery pack.

In various battery packs such as battery packs used in such residential ESSs, a plurality of battery cells (secondary batteries) are included to increase capacity and/or output. In particular, in order to increase the energy density of the battery pack, a large number of battery cells are often arranged in a dense state within a very narrow space.

In this battery pack configuration, one of the most important issues is safety. In particular, when a thermal event occurs in one battery cell among a plurality of battery cells included in a battery pack, propagation of the event to another battery cell needs to be suppressed. Moreover, a venting gas may be ejected from a battery cell in which a thermal runaway or the like occurs, and this venting gas may cause a thermal runaway or the like of another battery cell, resulting in thermal propagation.

Also, a plurality of battery cells included in the battery pack may exist in a form grouped into two or more battery modules. At this time, the propagation of a thermal runaway event generated inside a specific battery module to another battery module needs to be suppressed.

If the thermal propagation between battery cells or battery modules is not properly suppressed, this may expand to a thermal event for several battery cells or all battery modules included in the battery pack, which may cause bigger problems such as overall ignition or explosion of the battery pack. Moreover, fire or explosion generated in the battery pack may cause great damage to people or property nearby. In particular, in the case of a battery pack for a house, if a fire or explosion occurs, it may harm the safety of people living in the house and may cause very great damage by spreading to the house fire.

### DISCLOSURE

### Technical Problem

The present disclosure is designed to solve the problems of the related art, and therefore the present disclosure is directed to providing a battery pack having an improved structure so as to appropriately control a thermal event generated therein.

However, the technical problem to be solved by the present disclosure is not limited to the above-mentioned problem, and other problems not mentioned will be clearly understood by those skilled in the art from the present disclosure described below.

### Technical Solution

In one aspect of the present disclosure, there is provided a battery pack comprising: a battery module having at least one battery cell; a control module connected to the battery module and configured to manage the battery module; and a fire extinguishing tank containing a fire extinguishing agent, coupled to at least one of the battery module and the control module, and having a blocking member whose outer surface at least partially extends downward.

Preferably, the fire extinguishing tank may be mounted between the battery module and the control module.

More preferably, the fire extinguishing tank may be mounted to a lower part of the control module and an upper part of the battery module.

In an aspect of the present disclosure, the control module may be configured to be detachable from at least one side of the battery module.

In another aspect of the present disclosure, the blocking member may shield a coupling point between the fire extinguishing tank and the battery module.

In still another aspect of the present disclosure, the fire extinguishing tank and the battery module may be configured to be partially spaced apart from each other in upper and lower directions perpendicular to the ground, and a separation space may be formed between the fire extinguishing tank and the battery module.

In still another aspect of the present disclosure, the blocking member and the battery module may be configured to be partially spaced apart from each other in a horizontal direction, and a separation space may be formed between the blocking member and the battery module.

In still another aspect of the present disclosure, the blocking member may include a flat portion formed by extending one side of the fire extinguishing tank downward.

In still another aspect of the present disclosure, the blocking member may further include side portions extending perpendicularly to the flat portion from edges of both side ends of the flat portion.

In still another aspect of the present disclosure, the battery pack may include a plurality of battery modules.

Preferably, at least one of the flat portion and the side portion may extend in a stacking direction of the plurality of battery modules.

In another aspect of the present disclosure, the blocking member may shield a point between the plurality of battery modules.

Here, the blocking member may extend to a bottom of the battery module.

In still another aspect of the present disclosure, the flat portion may include at least one barrier parallel to the side portion.

In still another aspect of the present disclosure, the fire extinguishing tank may have a venting path formed so that a venting gas moves when the venting gas is discharged from the battery module.

In addition, an energy storage system according to another aspect of the present disclosure in order to accomplish the above object comprises the battery pack according to the present disclosure.

### Advantageous Effects

According to one aspect of the present disclosure, a battery pack with improved safety may be provided.

In particular, according to an embodiment of the present disclosure, even if a thermal event occurs inside the battery pack, the thermal event may be quickly controlled.

According to one aspect of the present disclosure, it is possible to change the moving direction of the venting gas discharged from the battery pack. Accordingly, the venting gas can be prevented from being directly injected into the surrounding environment.

Therefore, even if a venting gas is discharged from the battery pack, the risk of further ignition of objects adjacent to the battery pack can be reduced.

Moreover, when a venting gas or the like is generated due to thermal runaway in some of the plurality of battery cells included in the battery pack, the temperature of the corresponding battery cell may be rapidly lowered by injecting a fire extinguishing agent.

Therefore, according to this aspect of the present disclosure, the propagation of a thermal runaway situation or the like to other battery cells or other battery modules or the occurrence of fire due to heat or a venting gas may be effectively prevented.

In addition, according to one aspect of the present disclosure, even if a fire occurs inside the battery pack, a fire extinguishing agent, for example, a fire extinguishing agent in a liquid state is injected, so that the fire can be immediately extinguished.

Therefore, according to this aspect, it is possible to prevent or reduce human and material damage due to fire spread.

In addition, according to one aspect of the present disclosure, even in use under various external environments such as temperature or humidity, fire suppression performance by the fire extinguishing agent may be stably secured. For example, according to an embodiment of the present disclosure, since the fire extinguishing liquid does not easily freeze even when exposed to sub-zero temperatures for a long time, the battery pack may be installed and used outdoors.

Therefore, according to this aspect of the present disclosure, it may be more advantageously applied to a battery pack used outdoors, particularly a battery pack for house.

Further, according to an embodiment of the present disclosure, when a thermal event occurs in a specific battery module in a battery pack including a plurality of battery modules, a fire extinguishing agent may be injected only for the corresponding battery module.

Accordingly, according to this aspect of the present disclosure, intensive and effective control of a battery module in which an event occurs among a plurality of battery modules may be performed. In addition, according to this aspect of the present disclosure, a battery module in which an event has not occurred can be continuously used, and thus, continuous power supply of a certain level or more may be possible.

In addition, various additional effects can be achieved by various embodiments of the present disclosure. Various effects of the present disclosure will be described in detail in each embodiment, or descriptions of effects that can be easily understood by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a combined perspective view schematically showing a battery pack according to an embodiment of the present disclosure.
FIG. 2 is an exploded perspective view of the configuration of FIG. 1.
FIG. 3 is a perspective view schematically showing a configuration in which a fire extinguishing tank is removed from the battery pack according to an embodiment of the present disclosure.
FIG. 4 is a view schematically showing a configuration in which the fire extinguishing tank is assembled with the battery pack configuration of FIG. 3.
FIG. 5 is a lower perspective view schematically showing the configuration of a control module according to an embodiment of the present disclosure.
FIGS. 6 and 7 are perspective views schematically showing shapes of a fire extinguishing tank according to an embodiment of the present disclosure, as viewed from the top and bottom.
FIG. 8 is a cross-sectional view schematically showing some configurations of a battery pack according to an embodiment of the present disclosure.
FIG. 9 is an enlarged view of a partial cross-sectional configuration of a battery pack according to an embodiment of the present disclosure, as viewed from the front.
FIG. 10 is a view showing a partial cross-sectional configuration of a battery pack according to an embodiment of the present disclosure, as viewed from the top.
FIG. 11 is a view schematically showing a partial cross-sectional configuration of a battery pack according to an embodiment of the present disclosure, as viewed from the side.
FIG. 12 is a view for describing a location where a venting gas is discharged from the battery pack of FIG. 1.
FIG. 13 is a view for describing a fire extinguishing tank according to another embodiment of the present disclosure.
FIG. 14 is a view for describing a fire extinguishing tank according to still another embodiment of the present disclosure.
FIG. 15 is a view for describing a battery pack to which the fire extinguishing tank of FIG. 14 is applied.
FIG. 16 is a view for describing a fire extinguishing tank according to still another embodiment of the present disclosure.
FIG. 17 is a view for describing a fire extinguishing tank according to still another embodiment of the present disclosure.
FIG. 18 is a view for describing a battery pack to which the fire extinguishing tank of FIG. 17 is applied.
FIG. 19 is a view for describing a fire extinguishing tank according to still another embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

Meanwhile, in the present specification, terms indicating directions such as up, down, left, right, front, and back may be used, but these terms are only for convenience of description, and it is obvious to those skilled in the art that they may vary depending on the location of the target object or the location of the observer.

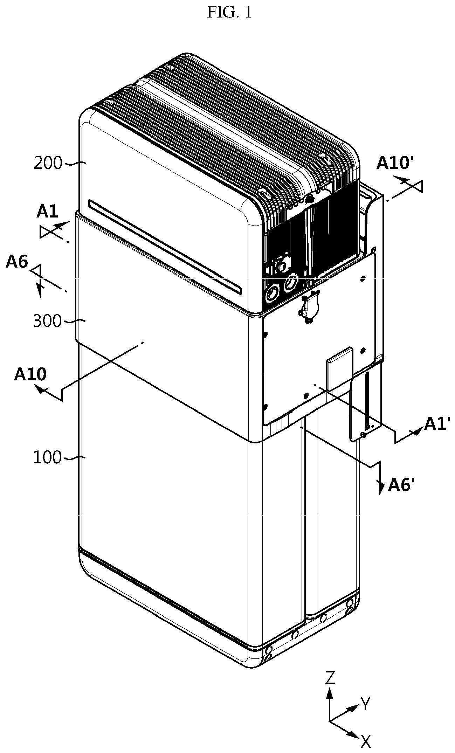

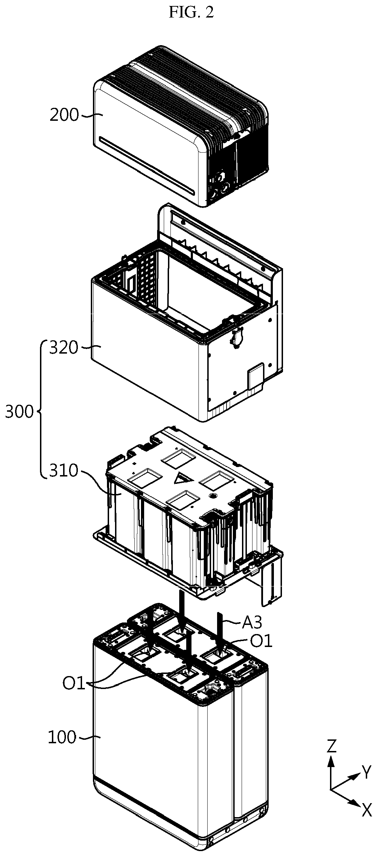

FIG. 1 is a combined perspective view schematically showing a battery pack according to an embodiment of the present disclosure, and FIG. 2 is an exploded perspective view of the configuration of FIG. 1.

Referring to FIGS. 1 and 2, the battery pack according to the present disclosure includes a battery module 100, a control module 200, and a fire extinguishing tank 300.

The battery module 100 may include at least one battery cell. Here, each battery cell may mean a secondary battery. A secondary battery may include an electrode assembly, an electrolyte, and a battery case. Moreover, the battery cell included in the battery module 100 may be a pouch-type secondary battery. However, other types of secondary batteries, such as cylindrical batteries or prismatic batteries, may also be employed in the battery module 100 of the present disclosure.

In addition, the battery module 100 may include a module case for accommodating battery cells. In particular, the module case has an empty space inside, so that a plurality of battery cells can be accommodated in this empty space. For example, as shown in FIG. 1, the module case may be formed in a substantially rectangular parallelepiped shape and erected in a Z-axis direction perpendicular to the ground.

The control module 200 may control the overall operation of the battery pack. In particular, the control module 200 may be electrically connected to the battery module 100. Also, the control module 200 may be configured to manage the battery module 100. In particular, the control module 200 may be configured to control a charging operation or a discharging operation of the battery module 100. In addition, the control module 200 may be configured to measure, calculate, receive or control various electrical, physical and chemical characteristics of the battery module 100, a battery cell included therein, or its surrounding environment. For example, the control module 200 may measure, calculate or control voltage, current, temperature, SOC (State Of Charge), SOH (State Of Health), internal resistance, etc. of the battery cell or the battery module 100.

The control module 200 may receive an operating power from the battery module 100 to manage the battery module 100. In addition, the control module 200 may exchange various data with the battery module 100 or other external devices through a wired or wireless communication network.

The control module 200 may include various electric components such as a battery management system (BMS), a relay, and a current sensor. In addition, the control module 200 may include a control housing for accommodating such electrical components.

In addition, the control module 200 may include a pack terminal. Such a pack terminal may be configured to be connected to a battery pack and an external charging or discharging device. For example, the pack terminal may include an outlet, a plug, a connector, etc. to be connected to a commercial power or a load. In this case, the control module 200 may have a power path for exchanging a charging power and discharging power with the battery module 100. This power path may function as a path for exchanging a charging and discharging power between the pack terminal and the battery module 100.

The fire extinguishing tank 300 may contain a fire extinguishing agent. Here, as the fire extinguishing agent, various substances capable of suppressing or extinguishing fire or lowering the temperature may be employed. In addition, the fire extinguishing tank 300 may include a tank housing for holding a fire extinguishing agent in an inner space.

The fire extinguishing tank 300 may be coupled to at least one of the battery module 100 and the control module 200. For example, the fire extinguishing tank 300 may be coupled with the battery module 100. Also, the fire extinguishing tank 300 may be coupled with the control module 200.

In particular, the fire extinguishing tank 300 may be configured to be detachable. For example, the tank housing of the fire extinguishing tank 300 may be configured to be mounted to and detached from the module case of the battery module 100. In addition, the tank housing of the fire extinguishing tank 300 may be configured to be mounted to and detached from the control housing of the control module 200.

According to an embodiment of the present disclosure, since the fire extinguishing tank 300 is mounted in a battery pack including the battery module 100 and the control module 200, safety can be greatly improved. In particular, when an abnormal situation occurs in the battery pack, for example, when a thermal runaway situation occurs inside the battery module 100 or when a fire occurs in the battery module 100 or the control module 200, the fire extinguishing agent may be used to suppress the occurrence of a fire or extinguish the generated fire. In addition, by lowering the temperature of the battery module 100 or the control module 200, a thermal runaway situation or an overheating situation may be blocked. Therefore, it is possible to prevent the risk of fire or the like from propagating to other parts outside the battery pack due to an abnormal situation such as a fire or overheating situation of the battery pack.

The fire extinguishing tank 300 may be mounted between the battery module 100 and the control module 200. In particular, the battery module 100 may be located under the control module 200. In this case, the fire extinguishing tank 300 may be located above the battery module 100 and below the control module 200.

According to this embodiment of the present disclosure, in a battery pack including the battery module 100 and the control module 200, the fire extinguishing tank 300 may be disposed adjacent to both the battery module 100 and the control module 200. Therefore, when a thermal event occurs in the battery module 100 and the control module 200, it is possible to cope with the thermal event quickly and effectively.

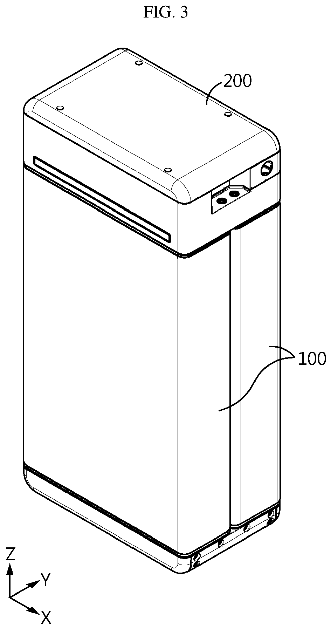

Here, the control module 200 may be configured to be detachable from at least one side of the battery module 100. This will be described in more detail with reference to FIGS. 3 to 5.

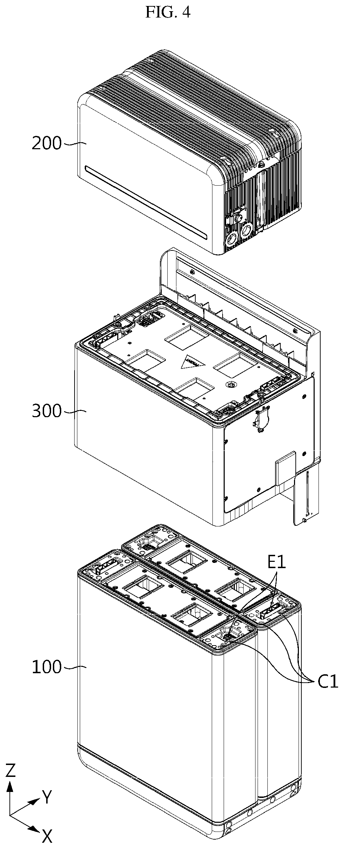

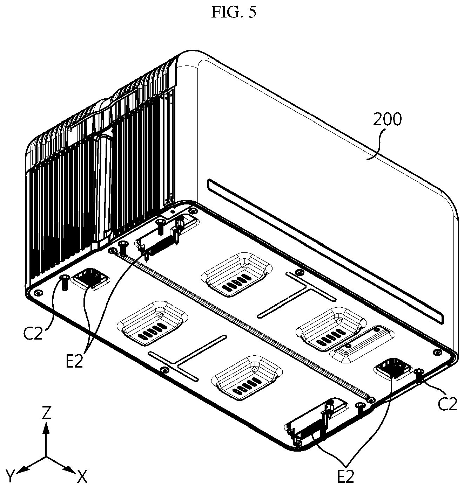

FIG. 3 is a perspective view schematically showing a configuration in which the fire extinguishing tank 300 is removed from the battery pack according to an embodiment of the present disclosure. Also, FIG. 4 is a view schematically showing a configuration in which the fire extinguishing tank 300 is assembled with the battery pack configuration of FIG. 3. Also, FIG. 5 is a lower perspective view schematically showing the configuration of the control module 200 according to an embodiment of the present disclosure.

First, referring to FIG. 3, unlike the configuration shown in FIG. 1, the fire extinguishing tank 300 may not be interposed between the control module 200 and the battery module 100. Moreover, the control module 200 may be directly mounted on top of the battery module 100 in a state where the fire extinguishing tank 300 is not located below. Also, after the control module 200 is mounted on top of the battery module 100, the control module 200 may be configured to be separated again.

To this end, the battery module 100 and the control module 200 may have a configuration for being electrically and mechanically coupled to each other.

For example, in the battery module 100, a module connector for electrical connection may be provided at an upper portion, as indicated by E1 in FIG. 4. In addition, the control module 200 may have a control connector provided at a lower portion, as indicated by E2 in FIG. 5. In this case, the control connector E2 may be configured to be directly connectable to the module connector E1. In particular, the module connector E1 and the control connector E2 may be electrically connected to each other so that a charging and discharging power or electrical signals (data) can be transmitted. In particular, the battery module 100 and the control module 200 may separately include a power supply connector for exchanging a charging and discharging power and a communication connector for exchanging electrical signals, respectively.

In addition, as indicated by C1 in FIG. 4, the battery module 100 may have a module fastening portion formed thereon. In addition, as indicated by C2 in FIG. 5, the control module 200 may have a control fastening portion formed thereon. Here, the control fastening portion C2 and the module fastening portion C1 may be configured to be coupled and fixed to each other. For example, the module fastening portion C1 and the control fastening portion C2 may be configured to be fastened to each other through bolt coupling. In addition, through such fastening or disconnection between the module fastening portion C1 and the control fastening portion C2, the control fastening portion C2 may be directly mounted to or separated from the module fastening portion C 1.

In this way, the battery module 100 and the control module 200 may be configured to be directly coupled mechanically and electrically to each other. In particular, the control module 200 may be coupled to the battery module 100 in a plug-in manner, in which electrical connection is made while the control module 200 is seated on the battery module 100. However, in the case of a battery pack according to one aspect of the present disclosure, the fire extinguishing tank 300 may be interposed between the battery module 100 and the control module 200 as indicated by a dotted line in FIG. 4.

In particular, even if the battery pack is manufactured to be usable in the form shown in FIG. 3, the battery pack according to one aspect of the present disclosure may be implemented such that the fire extinguishing tank 300 is inserted and mounted between the battery module 100 and the control module 200.

According to this embodiment of the present disclosure, safety by the fire extinguishing tank 300 may be ensured while maximally utilizing an existing battery pack structure or production line. In particular, according to an embodiment of the present disclosure, with respect to a battery pack configuration in which the battery module 100 and the control module 200 are directly mounted, the fire extinguishing tank 300 may be configured to be interposed between the battery module 100 and the control module 200, thereby securing safety against thermal events.

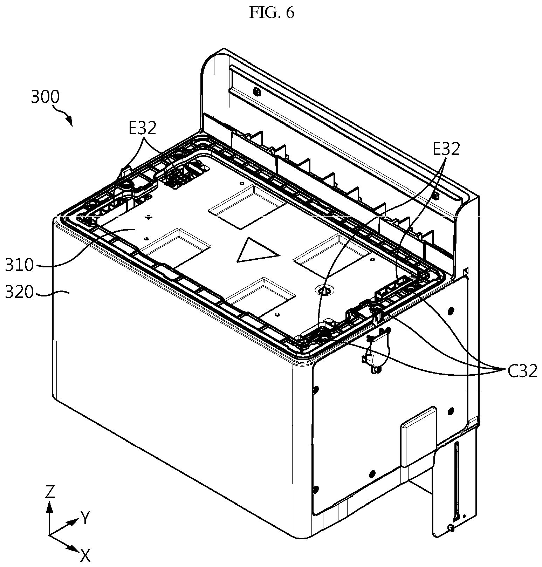

The fire extinguishing tank 300 may be configured to be mechanically coupled to the battery module 100 and/or the control module 200. To this end, the fire extinguishing tank 300 may include a tank fastening portion. This will be described in more detail with reference to FIGS. 6 to 8.

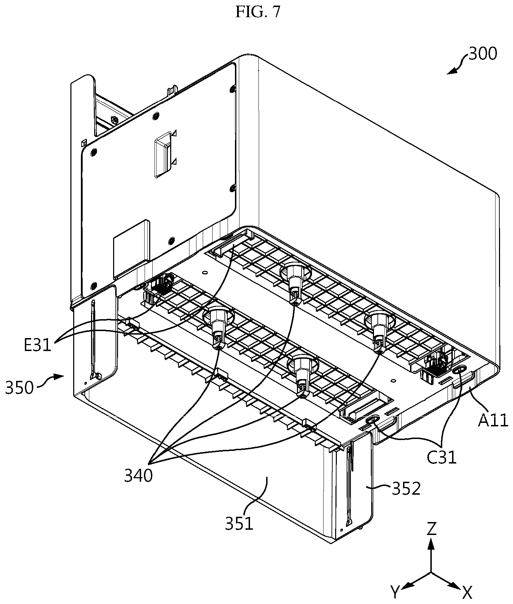

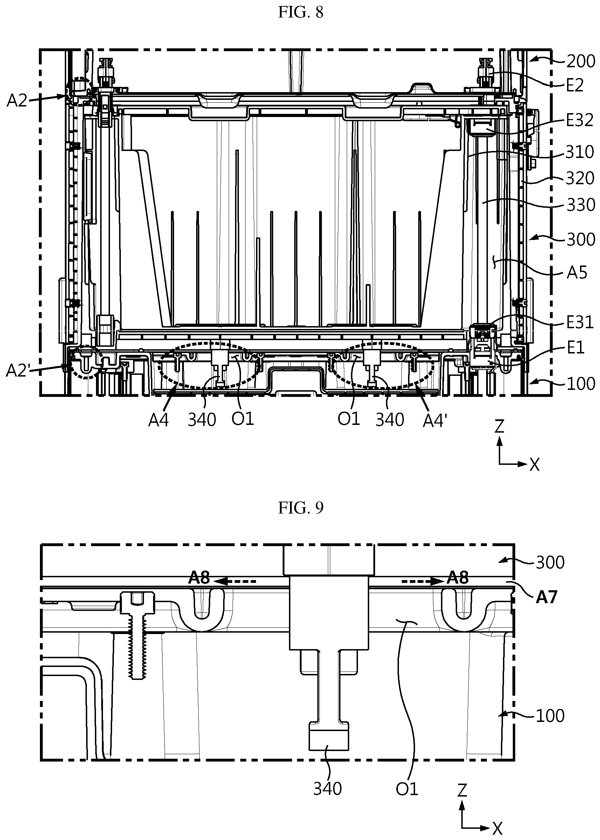

FIGS. 6 and 7 are perspective views schematically showing shapes of the fire extinguishing tank 300 according to an embodiment of the present disclosure, as viewed from the top and bottom. Also, FIG. 8 is a cross-sectional view schematically showing some configurations of a battery pack according to an embodiment of the present disclosure. For example, it can be said that FIG. 8 shows a cross-sectional configuration along line A1-A1' in FIG. 1.

First, referring to FIG. 6, the fire extinguishing tank 300 may have a tank fastening portion for coupling with the control module 200 on the top, as indicated by C32. The tank fastening portion C32 is a fastening portion provided in the tank housing of the fire extinguishing tank 300, and may be configured to be coupled with the control module 200. For example, as shown in FIG. 5, when the control fastening portion C2 is provided on the bottom of the control module 200, the tank fastening portion C32 formed on the top of the fire extinguishing tank 300 may be configured to be coupled to the control fastening portion C2. More specifically, the top tank fastening portion C32 may be configured to be bolted to the control fastening portion C2. For example, as indicated by A2 in FIG. 8, the top tank fastening portion C32 and the control fastening portion C2 may be bolted together. In addition, the control module 200 and the fire extinguishing tank 300 may be fixed to each other by bolting between the control fastening portion C2 and the top tank fastening portion C32.

In particular, as described in the previous embodiment, the control module 200 may be prepared to be directly seated on the battery module 100. In this case, the control fastening portion C2 may be originally configured to be coupled to the module fastening portion C1 of the battery module 100. However, in the battery pack according to the present disclosure, the tank fastening portion C32 provided in the fire extinguishing tank 300 may be configured to be coupled with the control fastening portion C2. To this end, the tank fastening portion C32 may have the same shape and horizontal position as the module fastening portion C1. That is, the top tank fastening portion C32 may be configured to have compatibility replacing the module fastening portion C 1 with respect to the control fastening portion C2.

In addition, the fire extinguishing tank 300 may have a tank fastening portion to be coupled with the battery module 100 at the bottom. For example, referring to FIG. 7, the tank fastening portion, as indicated by C31, may be provided at an edge portion of the bottom of the fire extinguishing tank 300 and coupled to the battery module 100. For example, as shown in FIG. 4, when the module fastening portion C1 is formed on the top of the battery module 100, the bottom tank fastening portion C31 of the fire extinguishing tank 300 may be configured to be coupled with the module fastening portion C1.

More specifically, the bottom tank fastening portion C31 may be configured to be bolted to the module fastening portion C 1. For example, as indicated by A2' in FIG. 8, the bottom tank fastening portion C31 and the module fastening portion C1 may be bolted to each other. In addition, the battery module 100 and the fire extinguishing tank 300 may be fixed to each other by bolting between the module fastening portion C1 and the bottom tank fastening portion C31.

Moreover, as described in the previous embodiment, the battery module 100 may be configured to be directly coupled with the control module 200. In this case, the module fastening portion C1 may be originally configured to be coupled to the control fastening portion C2 of the control module 200. However, in the battery pack according to the present disclosure, the tank fastening portion C31 provided in the fire extinguishing tank 300 may have the same shape and horizontal position as the control fastening portion C2 so as to be coupled with the module fastening portion C1. That is, the bottom tank fastening portion C31 may be configured to have compatibility replacing the control fastening portion C2 with respect to the module fastening portion C 1.

According to this embodiment of the present disclosure, with respect to a battery pack in which the battery module 100 and the control module 200 are directly coupled, a configuration for assembling the fire extinguishing tank 300 in the space between them can be easily implemented. In particular, in this case, compatible use of the fire extinguishing tank 300 is possible without the need to change the configuration of the existing battery module 100 or control module 200.

In addition, in the case of the battery pack according to one aspect of the present disclosure, the battery module 100, the fire extinguishing tank 300, and the control module 200 may be configured in a sequentially stacked form in an upward direction, and according to the embodiment, such a stacked state may remain stable.

Meanwhile, in addition to this, for stable coupling and convenience of assembly, the fire extinguishing tank 300 may have various types of fastening parts for mechanically coupling with the battery module 100 and/or the control module 200. For example, the fire extinguishing tank 300 may be mechanically coupled to the battery module 100 and/or the control module 200 in various ways such as hooking, insertion, riveting or the like.

The fire extinguishing tank 300 may include a connection member 330, as shown in FIG. 8. Here, the connection member 330 is a component for electrically connecting the battery module 100 and the control module 200. In particular, the connection member 330 may be interposed between the module connector E1 provided in the battery module 100 and the control connector E2 provided in the control module 200 to connect them. Furthermore, both ends of the connection member 330 may be coupled to the module connector E1 and the control connector E2, so that a charging and discharging power and/or electrical signals can be transmitted.

As a specific example, the connection member 330 may be configured in the form of a cable extending long in one direction so that power or electrical signals can move. Also, the connection member 330 may have tank connectors at both ends of the cable. For example, the connection member 330, as indicated by E31 in FIGS. 7 and 8, may have a tank connector on the bottom. Also, the bottom tank connector E31 may be connected to the module connector E1 of the battery module 100. In addition, the connection member 330 may have a tank connector on the top, as indicated by E32 in FIGS. 6 and 8. Also, the top tank connector E32 may be connected to the control connector E2 of the control module 200.

The fire extinguishing tank 300 may include an inner tank 310 and an outer tank 320 as shown in FIGS. 2, 6, and 8. Here, the inner tank 310 has an empty space therein, and the fire extinguishing agent may be directly accommodated in this inner space. In particular, the inner tank 310 may be configured in a sealed form to accommodate a fire extinguishing agent. For example, the inner tank 310 may be configured to have an airtight performance of IP grade 55 or higher so that the fire extinguishing liquid or the like does not leak under normal conditions. Also, the outer tank 320 may be configured to be larger than the inner tank 310 to accommodate the inner tank 310 in the inner space. Therefore, it can be said that the fire extinguishing tank 300 is at least partially doubled.

Moreover, the inner tank 310 and the outer tank 320 may be configured to be at least partially spaced apart. In particular, referring to the embodiment of FIG. 8, the inner tank 310 and the outer tank 320 may be configured to be at least partially spaced apart in the left and right directions. For example, an empty space may be formed between the sidewall of the inner tank 310 and the sidewall of the outer tank 320, as indicated by A5.

In this case, the fire extinguishing agent inside the fire extinguishing tank 300 may be held more safely. In particular, even if an impact or the like is applied on the side or the like of the fire extinguishing tank 300, transmission of the impact can be alleviated by the double structure of the outer tank 320 and the inner tank 310 and the empty space formed therebetween. Therefore, by preventing the fire extinguishing tank 300, particularly the inner tank 310, from being damaged by impact or vibration, abnormal leakage of the fire extinguishing agent can be prevented.

In this embodiment of the fire extinguishing tank 300, the connection member 330 may be located in the space between the inner tank 310 and the outer tank 320. For example, in the embodiment of FIG. 8, an empty space may be formed between a right wall of the inner tank 310 and a right wall of the outer tank 320. Also, the connection member 330 may be located in this separation space. In addition, an empty space having a similar form may be formed between a left wall of the inner tank 310 and a left wall of the outer tank 320, and the connection member 330 may be located therein.

According to this embodiment, the connection member 330 may not directly contact the fire extinguishing agent inside the fire extinguishing tank 300. Accordingly, problems such as corrosion of the connection member 330 or current leakage due to the fire extinguishing agent may be prevented.

As shown in FIGS. 1 and 2, the fire extinguishing tank 300 may be located above the battery module 100. In addition, the fire extinguishing agent discharged from the fire extinguishing tank 300 may be configured to freely fall toward the battery module 100.

That is, the fire extinguishing tank 300 does not require a separate power source to move the fire extinguishing agent toward the battery module 100, and the fire extinguishing agent can be rapidly injected. For example, referring to the embodiment of FIG. 2, as indicated by arrow A3, the fire extinguishing agent is injected into the battery module 100, and this injection process may be performed naturally in a free fall manner. Therefore, according to this embodiment of the present disclosure, it is possible to efficiently perform thermal control for a battery cell whose temperature has risen due to thermal runaway or the like.

The fire extinguishing agent may include a material in a liquid state. That is, the fire extinguishing tank 300 may accommodate a material in a liquid state as a fire extinguishing agent in the inner space of the inner tank 310. For example, the fire extinguishing agent may be water, a mixture of water and at least one additive, or a liquid containing the same.

The fire extinguishing agent in a liquid state may be easily injected through a free fall manner into the battery module 100 located below. In addition, the fire extinguishing agent in a liquid state may be advantageous for lowering the temperature of the battery module 100 and suppressing a fire. In addition, in this configuration, the fire extinguishing liquid may quickly and smoothly flow into the battery module 100, especially to the lower part of the module. In addition, through the fire extinguishing agent in a liquid state, the inflow of oxygen into the battery module, particularly into a battery cell where an event has occurred, can be suppressed.

Moreover, the fire extinguishing agent may include at least one of antifreeze, salt water, and insulating oil. That is, the fire extinguishing tank 300 may hold antifreeze, salt water, and/or insulating oil as a fire extinguishing agent, or may additionally contain other materials together with such a liquid material.

This embodiment may be more advantageous to outdoor installation of the battery pack. In particular, a battery pack used for residential ESS or industrial ESS may be used outdoors. At this time, as in this embodiment, when antifreeze, salt water, insulating oil, or the like is used as a fire extinguishing agent, the liquid state may be maintained without freezing even at a low temperature. Therefore, in a situation where a fire extinguishing agent must be injected into the battery module 100, a problem in which the agent cannot be injected due to freezing can be prevented. In addition, in this case, it is possible to prevent the volume from changing depending on the external temperature, thereby preventing the fire extinguishing tank 300 or the like from freezing and bursting. Moreover, the insulating oil may have insulation resistance performance, even if it is input to the battery module 100. Therefore, this embodiment of the present disclosure can be more advantageously applied to a residential battery pack or a residential energy storage system (ESS).

The fire extinguishing tank 300 may include a rupture member 340. Here, the rupture member 340 may rupture under certain conditions. In addition, when the rupture member 340 ruptures, the fire extinguishing agent may flow out.

To this end, the rupture member 340 may be configured to communicate with the inner space of the fire extinguishing tank 300. In particular, when the inner tank 310 and the outer tank 320 are provided in the fire extinguishing tank 300, the rupture member 340 may communicate with the inner space of the inner tank 310. For example, the inner tank 310 may be formed in a substantially sealed form and may have an input hole. In addition, the rupture member 340 may be inserted into the input hole to close the input hole. Also, when the rupture member 340 is ruptured, the input hole may be opened, so that the fire extinguishing agent contained in the inner tank 310 flows out.

The rupture member 340 may be located below the fire extinguishing tank 300. In this case, when the rupture member 340 ruptures, the fire extinguishing agent may be more smoothly injected into the battery module 100. In particular, the fire extinguishing agent may be injected into the battery module 100 in a free fall manner.

At least one rupture member 340 may be provided in one fire extinguishing tank 300. For example, as shown in FIG. 7, four rupture members 340 may be provided in one fire extinguishing tank 300.

In addition, the rupture member 340 may be configured to be damaged by conditions such as temperature or pressure. For example, the rupture member 340 may be configured to rupture under conditions of a certain temperature or higher and/or a certain pressure or higher.

In particular, the rupture member 340 may be configured to be ruptured by a venting gas. That is, when an event such as thermal runaway occurs in the battery module 100, a venting gas may be generated and discharged from the battery module 100. At this time, the rupture member 340 may be made of a material or shape that can be ruptured by the heat or pressure of the venting gas.

The rupture member 340 may be implemented as a glass bulb. For example, an input hole may be formed in the fire extinguishing tank 300, and a glass bulb may be inserted and fastened into this input hole. In addition, when the glass bulb comes into contact with the venting gas, the glass bulb may be damaged, causing the fire extinguishing agent inside the fire extinguishing tank 300 to be ejected to the outside, particularly toward the battery module 100.

According to this embodiment, while the fire extinguishing tank 300 is simply configured, the configuration of injecting the fire extinguishing agent into the battery module 100 can be made more smoothly. Also, according to this embodiment, a configuration in which the rupture member 340 is ruptured by a venting gas generated from the battery module 100 can be more easily provided.

In addition, the rupture member 340 may be implemented in various materials or shapes capable of rupturing according to changes in conditions such as heat or pressure. For example, the rupture member 340 may be implemented in the form of a vinyl material or an injection molding product.

An opening may be formed in the battery module 100 to communicate with an inner space. For example, as indicated by O1 in FIG. 2, an opening may be formed at the top of the battery module 100. Also, this opening O1 may communicate with the inner space of the module case where the battery cell is located.

Here, at least a part of the rupture member 340 may be configured to be inserted into the opening O1 of the battery module 100. For example, as indicated by A4 and A4' in FIG. 8, the rupture member 340 may be inserted into the inner space of the battery module 100 through the opening O1.

According to this embodiment of the present disclosure, a fire extinguishing agent may flow into the inner space of the battery module 100. Accordingly, it is possible to more effectively cope with thermal events occurring inside the battery module 100, such as thermal runaway, gas ejection, fire, and the like. Moreover, a battery cell that is a direct target of a thermal event may be located in the inner space of the battery module 100. Therefore, according to this embodiment, the fire extinguishing agent may be directly injected into the battery cell. Therefore, it can be more advantageous for suppression or prevention of fire or the like.

In addition, according to this embodiment of the present disclosure, the rupture member 340 such as a glass bulb may cope more quickly with the venting gas. That is, when a venting gas is generated in the inner space of the battery module 100, the venting gas may be discharged to the outside of the battery module 100 through the opening O1. In other words, the opening O1 may serve as an outlet for the venting gas in the battery module 100. Moreover, when the opening O1 is located on the upper side of the battery module 100, a large amount of venting gas may be discharged toward the opening O1 located on the upper side.

At this time, if the glass bulb is located in a portion where the venting gas is discharged, the glass bulb can be quickly ruptured when the venting gas is generated. Therefore, when a thermal event occurs, more rapid injection of the fire extinguishing agent may be possible. In addition, in this case, since the fire extinguishing agent can be directly injected to the discharged venting gas, the temperature of the venting gas can be lowered and the emission of external ignition sources such as flames or sparks included in the venting gas can be suppressed.

Meanwhile, the opening O1 formed in the battery module 100 may not necessarily be provided for discharging a venting gas or the like. For example, the opening O1 provided on the top of the battery module 100 shown in FIG. 2 may be provided for transportation of the battery module 100. That is, the opening O1 may be configured to provide a space in which a worker or a carrying device can insert a finger or a gripping tool to grip the battery module 100 when the battery module 100 is transported. Alternatively, the opening O1 may be configured to insert the control module 200 or the fire extinguishing tank 300.

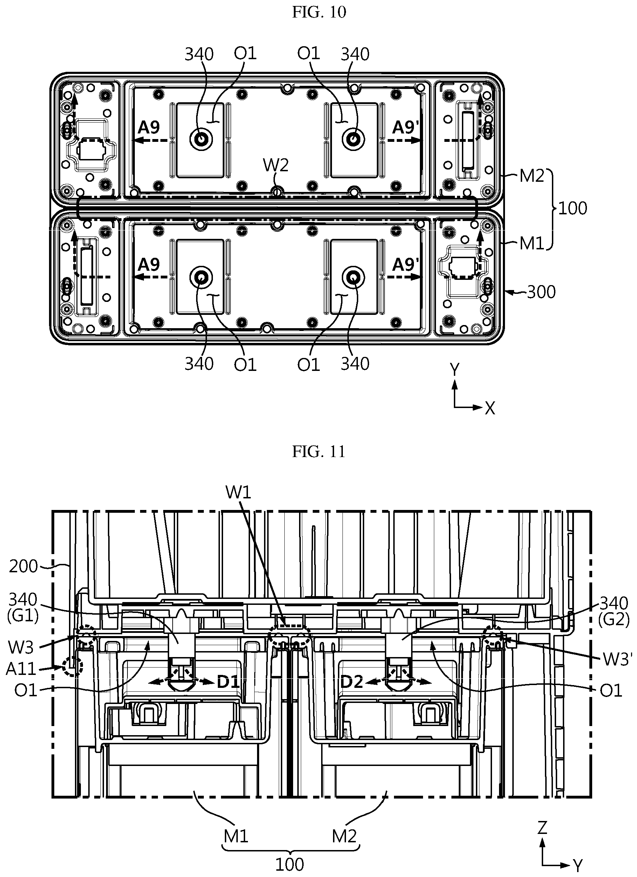

In the fire extinguishing tank 300, a venting path configured to allow movement of a venting gas may be formed. That is, when a venting gas is discharged from the opening O1 of the battery module 100, a venting path may be formed inside and/or outside the fire extinguishing tank 300 so that the venting gas is discharged to a specific part. This venting path may be formed by the fire extinguishing tank 300 alone or together with other components. This will be further described with reference to FIGS. 9 and 10 together with FIG. 8.

FIG. 9 is an enlarged view of a partial cross-sectional configuration of a battery pack according to an embodiment of the present disclosure, as viewed from the front. For example, FIG. 9 may be referred to as an enlarged view of a portion A4 of FIG. 8. Also, FIG. 10 is a view showing a partial cross-sectional configuration of a battery pack according to an embodiment of the present disclosure, as viewed from the top. For example, FIG. 10 is a cross-sectional view taken along line A6-A6' in FIG. 1.

First, referring to FIG. 9, in a state where the fire extinguishing tank 300 is mounted on the top of the battery module 100, the fire extinguishing tank 300 and the battery module 100 may be configured to be partially spaced apart from each other. Also, this separation space may communicate with the opening O1 of the battery module 100 and function as a venting path. That is, the fire extinguishing tank 300 and the battery module 100 are configured to be partially spaced apart from each other in upper and lower directions perpendicular to the ground, and a separation space may be formed between the fire extinguishing tank 300 and the battery module 100. For example, as indicated by A7 in FIG. 9, an empty space may be formed between the top of the battery module 100 and the bottom of the fire extinguishing tank 300. Also, the venting gas discharged through the opening O1 may be discharged to the outside through the separation space A7 of the battery module 100 and the fire extinguishing tank 300, as indicated by arrow A8. That is, in this embodiment, the separation space A7 between the battery module 100 and the fire extinguishing tank 300 may be provided as a venting path. In addition, the venting path formed between the battery module 100 and the fire extinguishing tank 300 may be connected to the outside of the battery pack, so that venting gas inside the battery pack may be discharged to the outside.

Also, the venting path may be formed inside the fire extinguishing tank 300. In particular, when the inner tank 310 and the outer tank 320 are included in the fire extinguishing tank 300, an empty space may be formed between the inner tank 310 and the outer tank 320. For example, as indicated by A5 in FIG. 8, the inner tank 310 and the outer tank 320 may be spaced apart from each other, and the corresponding space may function as a venting path.

Also, the separation space A5 between the inner tank 310 and the outer tank 320 may communicate with the opening O1 of the battery module 100. In addition, the venting path formed between the inner tank 310 and the outer tank 320 may be connected to the outside of the battery pack, so that the venting gas inside the battery pack may be discharged to the outside.

In addition, the venting path may be formed between the fire extinguishing tank 300 and the battery module 100 as indicated by A8 in FIG. 9 and between the outer tank 320 and the inner tank 310 as indicated by A5 in FIG. 8. Also, these venting paths may communicate with each other and be connected to the opening O1 and the external space.

In this embodiment, the venting gas discharged from the inside of the battery module 100 toward the opening O1 may damage the rupture member 340, for example, the glass bulb located in the opening O1, so that the fire extinguishing agent may flow into the battery module 100. Also, as indicated by arrows A9 and A9' in FIG. 10, the venting gas may be discharged to the outside of the battery module 100 while passing through the space between the fire extinguishing tank 300 and the battery module 100 and the venting path formed between the outer tank 320 and the inner tank 310, respectively. More specifically, referring to the embodiment of FIG. 10, the venting gas may be discharged to the outside of the battery pack by moving in the left and right directions (X-axis direction) in the inner space of the fire extinguishing tank 300 and then moving backward (+Y-axis direction). At this time, in the battery pack, the outlet of the venting path may be located at the rear of the battery pack.

According to this embodiment, since the venting gas discharge configuration is provided by the fire extinguishing tank 300 mounted on the battery module 100, the venting gas inside the battery module 100 may be smoothly discharged to the outside, thereby preventing explosion or the like caused by the increase of the internal pressure of the battery module 100.

Also, according to this embodiment, the direction of the venting gas discharged from the battery module 100 may be effectively controlled by the fire extinguishing tank 300. In particular, in this embodiment, the venting gas may be induced to flow toward the rupture member 340. Therefore, when a venting gas is generated, the rupture member 340 may be rapidly ruptured. Furthermore, in this embodiment, the venting gas may be moved to the rear side of the battery pack, as shown in FIG. 10. Therefore, it is possible to prevent direct exposure of the venting gas to a user or other components located on the front side of the battery pack.

Two or more battery modules 100 may be included in a battery pack. In this case, the fire extinguishing tank 300 may be configured to separately inject a fire extinguishing agent into each of the two or more battery modules 100. This will be described in more detail with further reference to FIG. 11.

FIG. 11 is a view schematically showing a partial cross-sectional configuration of a battery pack according to an embodiment of the present disclosure, as viewed from the side. For example, FIG. 11 may be as a cross-sectional view along line A10-A10' in FIG. 1.

Referring to FIG. 11 and the like, two or more battery modules 100 may be included in a battery pack. In addition, the fire extinguishing tank 300 may be configured to be assembled together with two or more battery modules 100. In this case, the fire extinguishing tank 300 may include at least two rupture members 340 so as to be spaced apart from each other in the stacking direction of the battery modules 100. Also, a plurality of rupture members 340 may be inserted into openings O1 of different battery modules 100, respectively. For example, in the embodiment of FIG. 11, a first glass bulb G1 may be inserted into the opening O1 of the first module M1 and a second glass bulb G2 may be inserted into the opening O1 of the second module M2.

Also, in this configuration, each of the glass bulbs G1, G2 may allow a fire extinguishing agent to be injected into the different battery modules 100 (M1, M2). For example, when a venting gas or flame is generated from the first module M1, as the first glass bulb G1 is broken, the fire extinguishing agent in the fire extinguishing tank 300 may be injected into the first module M1 as indicated by arrow D1. As another example, when a venting gas or flame is generated from the second module M2, as the second glass bulb G2 is broken, as indicated by arrow D2, the fire extinguishing agent in the fire extinguishing tank 300 may be injected into the second module M2.

According to this embodiment of the present disclosure, a fire extinguishing agent may be directly injected into each battery module 100 in the battery pack including a plurality of battery modules 100. In particular, according to this embodiment, a fire extinguishing agent may be injected only for the battery module 100 where an event occurs. Therefore, the other battery modules 100 to which the fire extinguishing agent is not injected may continue their operations. For example, when an event occurs in the first module M1, the first glass bulb G1 is damaged, and a fire extinguishing agent may be injected only into the first module M1. At this time, since the second glass bulb G2 is not damaged, no fire extinguishing agent is injected into the second module M2, so that the second module M2 may be continuously used. Therefore, even if a problem occurs in some of the battery modules 100, a problem in which the entire battery pack cannot be used can be prevented.

Meanwhile, in FIG. 11, it is illustrated that one rupture member 340 is inserted into one battery module 100, but two or more rupture members 340 may be inserted into one battery module 100. For example, as shown in FIG. 7 and the like, the fire extinguishing tank 300 may include two or more rupture members 340 in the front and rear directions and the left and right directions, respectively. In this case, two rupture members 340 disposed in the left and right directions may be inserted together into one battery module 100.

In an embodiment in which the battery pack includes a plurality of battery modules 100, the venting path may be separated between each battery module 100. For example, a protrusion may be formed between the first module M1 and the second module M2, as indicated by W1 in FIG. 11. This protrusion is provided in an upwardly convex shape on the top of the battery module 100, and may contact the bottom of the fire extinguishing tank 300.

In this case, the protrusion may prevent a venting gas or the like from flowing toward other battery modules 100. For example, when a venting gas is ejected through the opening O1 in the first module M1, the venting gas may flow in the left and right directions (X-axis direction) along the venting path formed between the upper part of the first module M1 and the lower part of the fire extinguishing tank 300, as shown in FIG. 10. However, the venting gas discharged from the first module M1 may not move toward the second module M2 due to the protrusion W1 formed between the first module M1 and the second module M2. That is, the protrusion W1 formed between the first module M1 and the second module M2 may function as a barrier that blocks the movement of a venting gas between them. In particular, the central protrusion W1 may be made of an elastic material such as rubber, silicone, or urethane in order to secure sealing performance.

Such a protrusion W1 may be formed to elongate in a direction (X-axis direction) orthogonal to the stacking direction of the battery module 100, among the horizontal directions. For example, in the drawing shown in FIG. 10, the protrusion as a barrier may be located between the first module M1 and the second module M2, as indicated by W2, but be formed to elongate in the left and right directions (X-axis direction).

According to this embodiment of the present disclosure, the venting direction of the venting gas may be controlled more reliably. Moreover, in this case, the venting gas discharged from some battery modules 100 may be prevented from flowing into other battery modules 100, thereby preventing thermal runaway propagation between battery modules. In addition, according to this embodiment, a problem in which the rupture member 340 is damaged due to the venting gas discharged from another battery module 100 and the fire extinguishing agent is injected into a normal battery module 100 can be prevented.

In addition, barriers may be formed on the outer side of the plurality of battery modules 100 as well. For example, as shown in the portion indicated by W3 in FIG. 11, at the front top edge of the first module M1 located on the front side, a protrusion (front protrusion) may also be provided as a barrier that is in contact with the fire extinguishing tank 300 and seals the venting path. In addition, as shown in the portion indicated W3' in FIG. 11, at the rear top edge of the second module M2 located on the rear side, a protrusion (rear protrusion) may also be provided a barrier that is in contact with the fire extinguishing tank 300 and seals the venting path. In addition, the front and rear protrusions W3, W3' may be made of an elastic material such as rubber, silicone, or urethane in order to secure sealing performance.

According to this embodiment of the present disclosure, the sealing force of the venting path formed between the battery module 100 and the fire extinguishing tank 300 may be secured, so that the venting gas may be discharged only in the intended direction. For example, according to this barrier configuration, the venting gas moves only in the directions indicated by the arrows A9 and A9' in FIG. 10, and it is possible to prevent the venting gas from moving in other directions, for example toward the front side of the battery pack.

Moreover, the fire extinguishing tank 300 may further include a sealing member at an edge portion coupled to the battery module 100 and/or the control module 200. For example, the fire extinguishing tank 300 may include an upper sealing member and a lower sealing member configured in a ring shape. Also, the upper sealing member may be provided on an upper rim of the fire extinguishing tank 300, and the lower sealing member may be provided on a lower rim of the fire extinguishing tank 300. The sealing member may be made of an elastic material such as rubber, silicone, or urethane.

According to this configuration, sealing performance can be ensured at the top and/or bottom of the fire extinguishing tank 300 with respect to the coupling portion with other components (battery module, control module). Therefore, it is possible to prevent leakage of the venting gas or penetration of foreign substances such as water, moisture, or dust through the corresponding portion.

In the battery pack according to the present disclosure, the fire extinguishing tank 300, the battery module 100, the control module 200, and the like may be configured to be coupled and fixed to a wall of a building such as a house or an office building. For example, the fire extinguishing tank 300 may have a fixing hole formed in a rear surface, and the fire extinguishing tank 300 may be fixed to a wall through the fixing hole. Alternatively, the battery pack according to the present disclosure may further include a fixing unit configured to be coupled to a wall or the like. This fixing unit may be fastened to a component such as the fire extinguishing tank 300 or the battery module 100, so that the battery pack can be fixed to the wall.

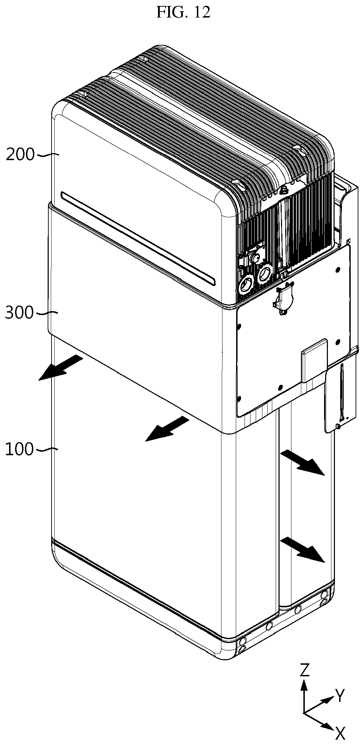

FIG. 12 is a view for describing a location where a venting gas is discharged from the battery pack of FIG. 1.

Referring to FIGS. 10 to 12, when a venting gas is ejected through the opening O1 in the first module M1, the venting gas flows in left and right directions (X-axis direction) along the venting path formed between the upper part of the first module M1 and the lower part of the fire extinguishing tank 300, as shown in FIG. 10. At this time, if too much venting gas is generated, the pressure in the space occupied by the opening O1 of the battery module 100 may increase. Therefore, the venting gas may be discharged while pushing the protrusion that seals the venting path, as indicated by W3 in FIG. 11. Eventually, the venting gas flowing in the left and right directions may be discharged between the battery module 100 and the fire extinguishing tank 300, as shown in FIG. 12. Alternatively, when the pressure in the space occupied by the opening O1 of the battery module 100 increases, the venting gas may be discharged while pushing the protrusion that seals the venting path, as indicated by W1 in FIG. 11. Eventually, the venting gas flowing in the left and right directions may be discharged between the first module M1 and the second module M2, as shown in FIG. 12. As such, the venting gas may be discharged through a gap between the battery module 100 and the fire extinguishing tank 300 or a gap between the battery module 100 and the battery module 100. That is, since the venting gas is discharged through the gap, the discharge direction of the venting gas may be perpendicular to the outer surface of the battery pack.

In this regard, it is common to use the battery pack by placing it near an indoor or outdoor wall. At this time, since the generated venting gas is discharged perpendicularly to the outer surface of the battery pack, if the battery pack is placed adjacent to a wall or the like, the high-temperature venting gas may be discharged vertically toward the wall to rapidly raise the temperature of the wall. Therefore, the adjacent wall surface may be in directly contact with the high-temperature venting gas, and there may be a risk of additional ignition.

Therefore, in the present disclosure, by including a fire extinguishing tank 300, which contains a fire extinguishing agent, is coupled to at least one of the battery module 100 and the control module 200, and includes a blocking member 350 whose an outer surface at least partially extends downwards, as shown in FIG7, it is possible to block the risk of additional ignition of the wall. This will be described in more detail below with reference to FIGS. 7 and 12 to 19.

Also, for reference, in this specification, for convenience, even though the case where the temperature of the wall adjacent to the battery pack is increased is described as an example, the present disclosure is not limited only to the wall but may also be applied to all components that can be placed adjacent to the battery pack in the same way.

Referring back to FIG. 7, the fire extinguishing tank 300 may include a blocking member 350 whose outer surface at least partially extends downward. For example, the fire extinguishing tank 300 may be formed in a substantially rectangular parallelepiped shape and erected in upper and lower directions (Z-axis direction) perpendicular to the ground. At this time, the fire extinguishing tank 300 may include a blocking member 350 formed by extending at least one of four sides downward. For example, the blocking member 350 of the embodiment of FIG. 7 is a blocking member 350 formed by extending one of four sides of the fire extinguishing tank 300 downward.

According to this structure, even when the battery pack of the present disclosure is disposed adjacent to the wall, since the blocking member 350 is disposed close to the wall, direct contact of the venting gas with the wall can be prevented. Accordingly, additional risk of ignition of the wall or the like adjacent to the battery pack, can be blocked.

Referring back to FIG. 7, the fire extinguishing tank 300 may further include a blocking member 350 configured to protrude toward the battery module 100 at an edge portion coupled to the battery module 100. For example, referring to the embodiment drawings of FIGS. 7 and 11, as shown in the portion indicated by A11, at the bottom of at least a part of the edge of the fire extinguishing tank 300, a blocking member 350 extending downward further to the top of the battery module 100 may be formed. Also, when the fire extinguishing tank 300 is mounted to the battery module 100, this blocking member 350 may be configured to cover the outer side of the battery module 100.

According to this embodiment of the present disclosure, the coupling property between the fire extinguishing tank 300 and the battery module 100 may be further improved. In addition, according to this embodiment, when the fire extinguishing agent is sprayed from the fire extinguishing tank 300, the fire extinguishing agent may be well injected into the battery module 100, and leakage of the fire extinguishing agent to the outside of the battery pack may be suppressed.

Referring back to FIG. 7, the blocking member 350 may shield a top area of the battery module 100.

As shown in FIGS. 11 and 12, a venting gas may be discharged through the gap between the battery module 100 and the fire extinguishing tank 300. Since the fire extinguishing tank 300 is located above the battery module 100 and below the control module 200, the gap between the battery module 100 and the fire extinguishing tank 300 may be an area near the top of the battery module 100. Therefore, it is preferable that the blocking member 350 shields the top area of the battery module 100. More preferably, the blocking member 350 may shield a coupling point between the fire extinguishing tank 300 and the battery module 100. According to this structure, direct contact of the venting gas to the wall can be prevented. Accordingly, the risk of additional ignition of the wall or other object adjacent to the battery pack can be blocked.

Referring to FIGS. 11 and 12, the fire extinguishing tank 300 and the battery module 100 are configured to be partially spaced from each other in upper and lower directions perpendicular to the ground, and a separation space A7 may be formed between the fire extinguishing tank 300 and the battery module 100. In this configuration, the separation space A7 between the battery module 100 and the fire extinguishing tank 300 may be provided as a venting path in a horizontal direction.

Preferably, the blocking member 350 and the battery module 100 are configured to be partially spaced apart from each other in a horizontal direction, and a separation space may be formed between the blocking member 350 and the battery module 100. In this configuration, the separation space between the battery module 100 and the fire extinguishing tank 300 may be provided as a venting path in a vertical direction. In particular, the separation space between the battery module 100 and the fire extinguishing tank 300 may be provided as a venting path in a lower direction. In addition, the venting path formed between the battery module 100 and the fire extinguishing tank 300 may be connected to the outside of the battery pack, so that the venting gas inside the battery pack may be discharged to the outside.

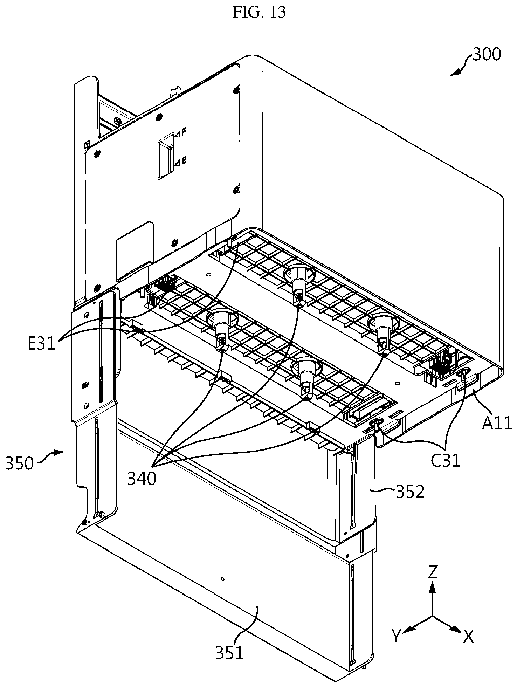

FIG. 13 is a view for describing a fire extinguishing tank 300 according to another embodiment of the present disclosure.

Since the fire extinguishing tank 300 according to this embodiment is similar to the fire extinguishing tank 300 of the previous embodiment, redundant descriptions of components substantially the same as or similar to those of the previous embodiment will be omitted, and differences from the previous embodiment will be mainly explained below.

Referring to FIG. 13, the blocking member 350 may be configured to have a longer length in the upper and lower directions than the blocking member 350 of FIG. 7. According to this structure, since the discharge path of the venting gas becomes longer, the cooling effect of the venting gas can be increased.

In another aspect of the present disclosure, although the length of the blocking member 350 of FIG. 13 is longer than the length of the blocking member 350 of FIG. 7, this length may not completely shield the lower part of the battery module 100. That is, since the venting gas is discharged from the end of the blocking member 350, there is a possibility that the venting gas may come into contact with a wall or the like located in a region near the end of the blocking member 350. However, even in this case, since the venting gas is not discharged perpendicularly to the wall but is discharged in a direction parallel to the wall, the risk of additional ignition of the wall or the like can be mitigated. That is, the venting gas may move downward along the blocking member 350 and eventually be discharged downward. That is, the moving direction of the venting gas may be changed by the blocking member 350. For example, as shown in FIG. 10, while the venting gas is moving in the left and right directions (X-axis direction), the movement of the venting gas may be blocked by the blocking member 350 as shown in FIG. 12, so the moving direction of the venting gas may be changed to a downward direction (-Z direction). Therefore, since the venting gas is prevented from being emitted perpendicularly to the wall or the like due to the blocking member 350 of the present disclosure, the risk of additional ignition of the wall or the like can be greatly mitigated.

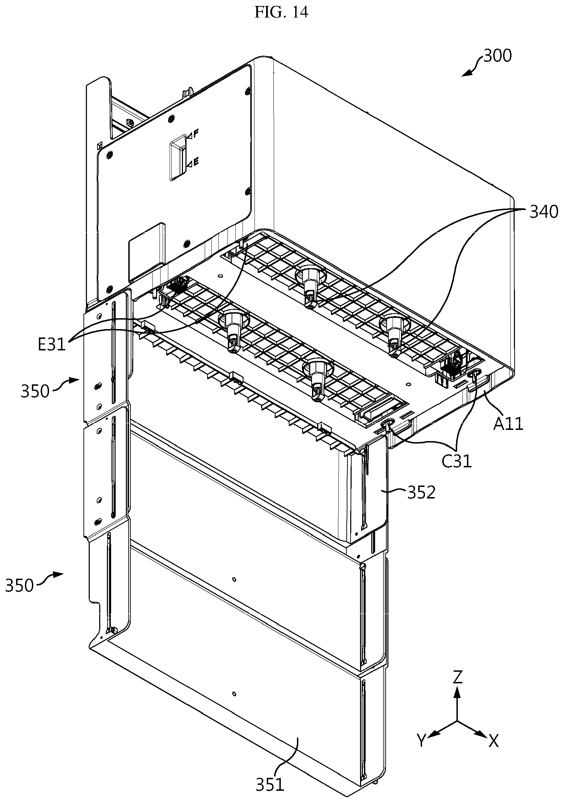

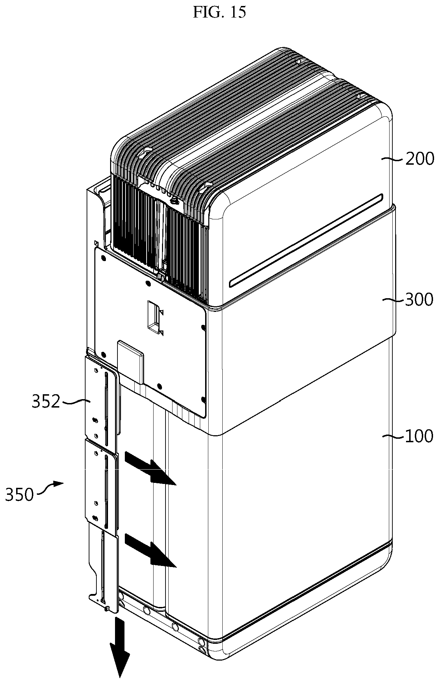

FIG. 14 is a view for describing a fire extinguishing tank 300 according to still another embodiment of the present disclosure, and FIG. 15 is a view for describing a battery pack to which the fire extinguishing tank 300 of FIG. 14 is applied.

Since the fire extinguishing tank 300 according to this embodiment is similar to the fire extinguishing tank 300 of the previous embodiment, redundant descriptions of components substantially the same as or similar to those of the previous embodiment will be omitted, and differences from the previous embodiment will be mainly explained below.

Referring to FIGS. 14 and 15, the blocking member 350 may be configured to have a longer length in the upper and lower directions than the blocking member 350 of FIG. 13. In particular, the blocking member 350 may extend to the bottom end of the battery module 100. According to this structure, since the discharge path of the venting gas becomes longer, the cooling effect of the venting gas can be additionally increased.

For example, when the blocking member 350 is configured to shield only up to a partial height of the battery module 100 as shown in FIG. 7 or FIG. 13, the venting gas may stay for a certain period of time in the space between the end of the blocking member 350 and the floor where the battery pack is mounted. The venting gas is not discharged perpendicularly to an adjacent wall or the like due to the blocking member 350, but when the venting gas stays for a certain period of time in the space between the end of the blocking member 350 and the floor where the battery pack is mounted, the temperature of the wall or the like may increase. On the other hand, according to the blocking member 350 of FIG. 14, since the blocking member 350 extends to the bottom of the battery module 100, the generated venting gas may finally be discharged near the floor where the battery pack is mounted. Therefore, the time during which the venting gas stays in the space between the battery pack and the wall or the like may be reduced. Accordingly, according to this embodiment, the possibility of temperature rise of the wall or the like can be further reduced.

Referring back to FIGS. 7 and 11 to 15, the blocking member 350 may include a flat portion 351 formed by extending one side of the fire extinguishing tank 300 downward. The blocking member 350 may further include side portions 352 extending perpendicularly to the flat portion 351 from edges of both side ends of the flat portion 351.

The side portion 352 may change the moving direction of the venting gas. When the side portion 352 is not provided, the venting gas is discharged in a direction parallel to the wall or the like, and eventually the possibility of contact, or even indirect contact, with the wall or the like occurs. On the other hand, according to the structure in which the side portion 352 extends perpendicularly to the flat portion 351 from both side end edges of the flat portion 351 as shown in FIG 15, gas may be discharged in a direction perpendicular to the wall or the like and away from the wall or the like. Accordingly, the possibility of further temperature rise of the wall or the like can be further reduced.

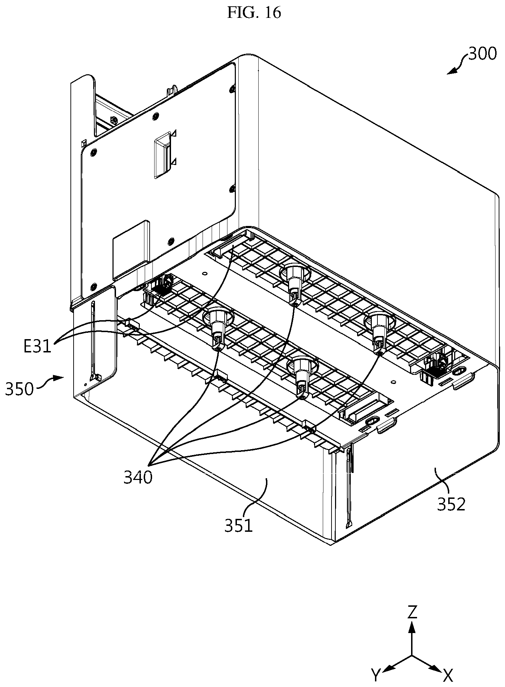

FIG. 16 is a view for describing a fire extinguishing tank 300 according to still another embodiment of the present disclosure.

Since the fire extinguishing tank 300 according to this embodiment is similar to the fire extinguishing tank 300 of the previous embodiment, redundant descriptions of components substantially the same as or similar to those of the previous embodiment will be omitted, and differences from the previous embodiment will be mainly explained below.

Referring to FIG. 16, at least one of the flat portion 351 and the side portion 352 may extend to a side end of the plurality of battery modules 100. In FIG. 16, both the flat portion 351 and the side portion 352 extend to the side end of the battery module 100.

For example, the battery pack may be disposed adjacent to a wall or the like, but may also be disposed at an edge point where walls meet. In this case, the battery pack can be placed adjacent to both walls. In this case, the venting gas discharged through the gap between the battery module 100 and the fire extinguishing tank 300 may be discharged to directly contact both walls. In this regard, according to the above structure of the present disclosure, since at least one of the flat portion 351 and the side portion 352 may entirely shield the gap between the battery module 100 and the fire extinguishing tank 300, even if the battery pack is disposed at an edge point of walls, the risk of additional ignition of the walls or the like can be blocked.

In another aspect of the present disclosure, referring to FIG. 16, the battery pack may include a plurality of battery modules 100. Here, at least one of the flat portion 351 and the side portion 352 may extend in a stacking direction of the plurality of battery modules 100. Preferably, the blocking member 350 may be configured to shield a point between the plurality of battery modules 100.

Referring back to FIGS. 10 to 12, when a venting gas is ejected through the opening O1 in the first module M1, the venting gas may flow in left and right directions (X-axis direction) along the venting path formed between the upper part of the first module M1 and the lower part of the fire extinguishing tank 300 as shown in FIG. 10. At this time, if too much venting gas is generated, the pressure in the space occupied by the opening O1 of the battery module 100 may increase. When the pressure in the space occupied by the opening O1 of the battery module 100 increases, the venting gas may be discharged while pushing the protrusion that seals the venting path, as indicated by W1 in FIG. 11. Eventually, the venting gas flowing in the left and right directions may be discharged between the first module M1 and the second module M2, as shown in FIG. 12. In this way, the venting gas may be discharged through the gap between the battery module 100 and the battery module 100. That is, since the venting gas is discharged through the gap, the discharge direction of the venting gas may be perpendicular to the outer surface of the battery pack.

According to the embodiment of FIG. 16, since the blocking member 350 is configured to shield a point between the plurality of battery modules 100, the venting gas discharged between the first module M1 and the second module M2 may be effectively prevented from being emitted perpendicularly to a wall or the like.

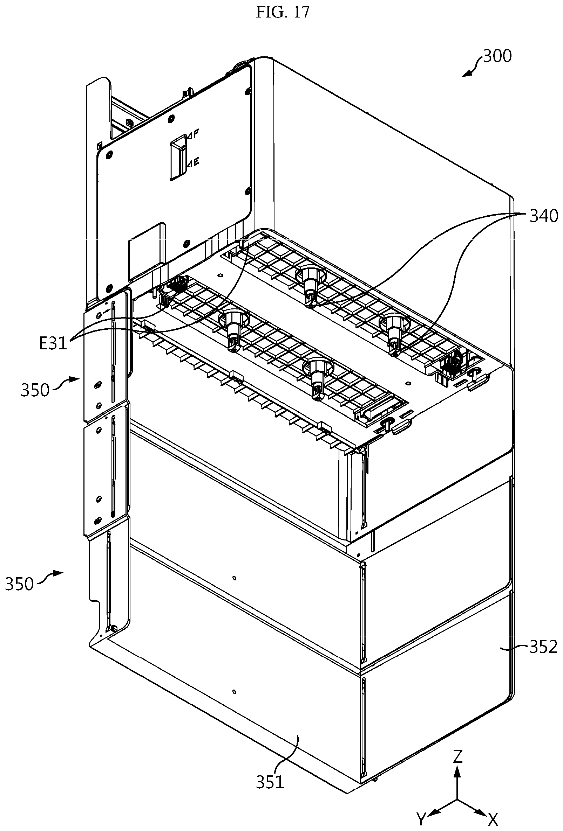

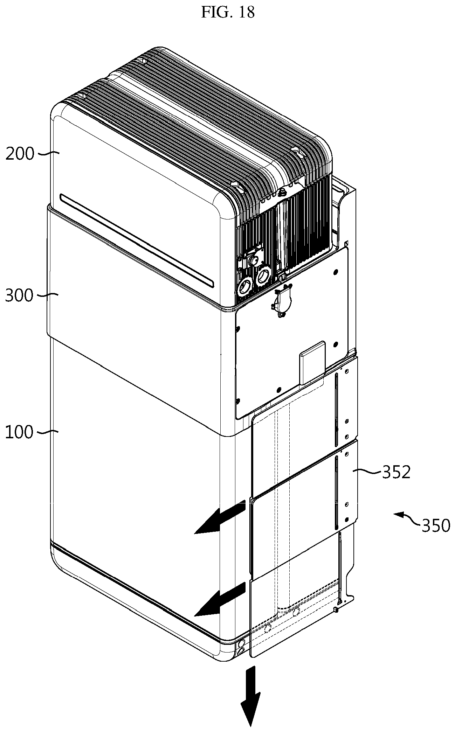

FIG. 17 is a view for describing a fire extinguishing tank 300 according to still another embodiment of the present disclosure, and FIG. 18 is a view for describing a battery pack to which the fire extinguishing tank 300 of FIG. 17 is applied.

Since the fire extinguishing tank 300 according to this embodiment is similar to the fire extinguishing tank 300 of the previous embodiment, redundant descriptions of components substantially the same as or similar to those of the previous embodiment will be omitted, and differences from the previous embodiment will be mainly explained below.

FIGS. 17 and 18 are modified examples in which the blocking member 350 extends to the bottom end of the battery module 100 in the embodiment of FIG. 16. According to this structure, since the discharge path of the venting gas becomes longer, the cooling effect of the venting gas can be additionally increased. In addition, according to this structure, since the blocking member 350 extends to the bottom of the battery module 100, the generated venting gas can be finally discharged near the floor where the battery pack is mounted. Therefore, the time during which the venting gas stays in the space between the battery pack and the wall or the like may be reduced. Accordingly, according to this embodiment, the possibility of temperature rise of the wall or the like can be further reduced.

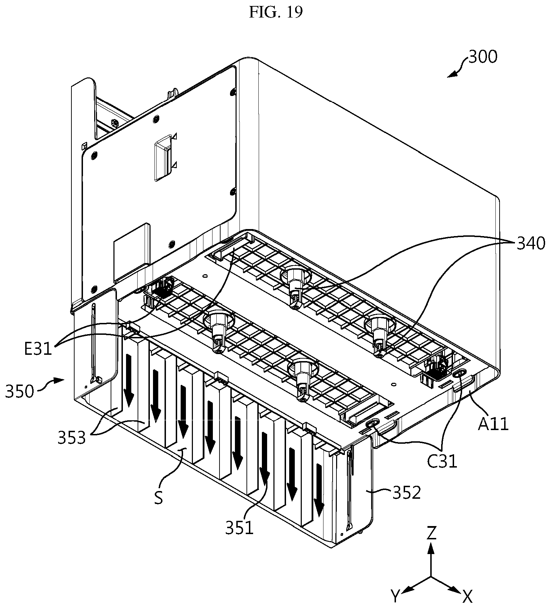

FIG. 19 is a view for describing a fire extinguishing tank 300 according to still another embodiment of the present disclosure.

Since the fire extinguishing tank 300 according to this embodiment is similar to the fire extinguishing tank 300 of the previous embodiment, redundant descriptions of components substantially the same as or similar to those of the previous embodiment will be omitted, and differences from the previous embodiment will be mainly explained below.

Referring to FIG. 19, the flat portion 351 may include at least one barrier 353 parallel to the side portion 352. A discharge space may be formed between the barrier 353 and the barrier 353. According to the structure in which the flat portion 351 includes at least one barrier 353 parallel to the side portion 352 as described above, the generated venting gas may move along the blocking member 350 easily. That is, the venting gas can be effectively discharged through the passage of the narrow discharge space. As a result, the venting gas can be discharged smoothly.

Although not shown in the drawings, as another embodiment of the present disclosure, some of the discharge spaces may be configured to be sealed, and a cooling liquid may be additionally included in the sealed discharge space. In this case, a venting gas moving to a discharge space adjacent to the sealed discharge space containing the cooling liquid may be cooled during the movement process. Therefore, the risk of temperature rise of the wall or the like due to the venting gas can be further reduced.

An energy storage system according to the present disclosure includes one or more battery packs according to the present disclosure. In addition, the energy storage system according to the present disclosure may further include general components included in an energy storage system, in addition to the battery pack. In particular, the energy storage system according to the present disclosure may be an energy storage system for a house (building) used to store energy in a house or building.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

### [Reference Signs]

100: battery module
M1: first module, M2: second module
200: control module
300: fire extinguishing tank
310: inner tank
320: outer tank
330: connection member
340: rupture member
350: blocking member
351: flat portion
352: side portion
353: barrier
C1: module fastening portion, C2: control fastening portion
C31, C32: tank fastening portion
E1: module connector, E2: control connector
E31, E32: tank connector

## Claims

1. A battery pack comprising:
a battery module having at least one battery cell;
a control module connected to the battery module and configured to manage the battery module; and
a fire extinguishing tank containing a fire extinguishing agent, coupled to at least one of the battery module and the control module, and having a blocking member whose outer surface at least partially extends downward.

2. The battery pack according to claim 1, wherein the fire extinguishing tank is mounted between the battery module and the control module.

3. The battery pack according to claim 1, wherein the fire extinguishing tank is mounted to a lower part of the control module and an upper part of the battery module.

4. The battery pack according to claim 2, wherein the control module is configured to be detachable from at least one side of the battery module.

5. The battery pack according to claim 2, wherein the blocking member shields a coupling point between the fire extinguishing tank and the battery module.

6. The battery pack according to claim 1, wherein the fire extinguishing tank and the battery module are configured to be partially spaced apart from each other in upper and lower directions perpendicular to the ground, and a separation space is formed between the fire extinguishing tank and the battery module.

7. The battery pack according to claim 1, wherein the blocking member and the battery module are configured to be partially spaced apart from each other in a horizontal direction, and a separation space is formed between the blocking member and the battery module.

8. The battery pack according to claim 1, wherein the blocking member includes a flat portion formed by extending one side of the fire extinguishing tank downward.

9. The battery pack according to claim 8, wherein the blocking member further includes side portions extending perpendicularly to the flat portion from edges of both side ends of the flat portion.

10. The battery pack according to claim 9, wherein the battery pack includes a plurality of battery modules, and
wherein at least one of the flat portion and the side portion extends in a stacking direction of the plurality of battery modules.

11. The battery pack according to claim 1, wherein the battery pack includes a plurality of battery modules, and
wherein the blocking member shields a point between the plurality of battery modules.

12. The battery pack according to claim 1 wherein the blocking member extends to a bottom of the battery module.

13. The battery pack according to claim 9, wherein the flat portion includes at least one barrier parallel to the side portion.

14. The battery pack according to claim 1, wherein the fire extinguishing tank has a venting path formed so that a venting gas moves when the venting gas is discharged from the battery module.

15. An energy storage system, comprising the battery pack according to any one of claims 1 to 14.
